(19) Europäisches Patentamt
European Patent Office
Office européen des brevets

(11) **EP 4 692 722 A1**

(12) **EUROPEAN PATENT APPLICATION**
published in accordance with Art. 153(4) EPC

(43) Date of publication:
**11.02.2026 Bulletin 2026/07**

(21) Application number: **24780148.3**

(22) Date of filing: **25.03.2024**

(51) International Patent Classification (IPC):
**G01C 15/00** (2006.01)

(52) Cooperative Patent Classification (CPC):
**G01C 15/00**

(86) International application number:
**PCT/JP2024/011634**

(87) International publication number:
**WO 2024/204030 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023058258**

(71) Applicant: Topcon Corporation
**Tokyo 174-8580 (JP)**

(72) Inventors:
• **SASAKI, Takeshi**
  **Tokyo 174-8580 (JP)**
• **FUKAYA, Nobuyuki**
  **Tokyo 174-8580 (JP)**

(74) Representative: **Schmitt-Nilson Schraud Waibel
Wohlfrom
Patentanwälte Partnerschaft mbB
Pelkovenstraße 143
80992 München (DE)**

(54) **HEAVY EQUIPMENT INFORMATION ACQUISITION METHOD, SYSTEM, AND PROGRAM**

(57) The position of a moving part of a heavy machine is calculated efficiently. In a method of calculating, in a heavy machine 100 comprising a rotating part 110 that rotates horizontally, a position of a center of rotation of the rotating part 110 and a posture of the rotating part 110, a total station 200 measures a position of a reflective prism 102 fixed to the rotating part 110. Image data of a captured image captured by a camera 101 fixed to the rotating part 110 is obtained. A position of the camera 101 is calculated based on the position of the reflective prism 102 measured by the total station 200 and the image data of the captured image captured by the camera 101. The position of the center of rotation of the rotating part 110 and the posture of the rotating part 110 are calculated based on the calculated positions of the reflective prism 102 and the camera 101.

Fig. 1

## Description

[Technical Field]

The present invention relates to techniques for acquiring information required for surveys or control related to heavy machines.

[Background Art]

There have been known techniques for measuring the position of a heavy machine using a surveying apparatus (see, e.g., Patent Literature 1). Further, there have been known techniques for measuring the position of a moving part of a heavy machine using a surveying apparatus (see, e.g., Patent Literature 2).

[Citation List]

[Patent Literature]

[Patent Literature 1] Japanese Patent Laid-Open No. 8-43093
[Patent Literature 2] Japanese Patent Laid-Open No. 2018-146407

[Summary of Invention]

[Technical Problem]

In detecting the position of the cutting edge (e.g., the bucket part of a power shovel) of a heavy machine (a construction work machine), the center of rotation of the rotating part of the heavy machine is detected first. Then, the position of the cutting edge is detected with reference thereto. The work of calculating this center of rotation is troublesome and needs to be improved. In view of this background, the present invention aims to obtain a technique for efficiently calculating information on a heavy machine.

[Solution to Problem]

The present invention is a method of acquiring information on a heavy machine, the heavy machine comprising a rotating part that rotates horizontally, the method being a method of calculating a position of a center of rotation of the rotating part and a posture of the rotating part, the method comprising: measuring a position of a specific part of the rotating part; obtaining image data of a captured image captured by a camera fixed to the rotating part; calculating a position of the camera based on the position of the specific part and the image data; and calculating the position of the center of rotation of the rotating part and the posture of the rotating part based on the position of the specific part and the position of the camera.

The present invention includes an aspect in which the position of the specific part is a position of a reflective prism fixed to the rotating part. The present invention includes an aspect in which the position of the camera is calculated by bundle adjustment calculation using the position of the specific part as the position of the camera. The present invention includes an aspect in which relationship between the positions of the specific part of the rotating part, the camera, and the center of rotation of the rotating part is known, and determining the positions of the specific part and the camera in a specific coordinate system allows calculation of the position of the center of rotation of the rotating part and the posture of the rotating part in the coordinate system.

The present invention is a system that calculates, in a heavy machine comprising a rotating part that rotates horizontally, a position of a center of rotation of the rotating part and a posture of the rotating part, the system comprising: means for measuring a position of a specific part of the rotating part; means for obtaining image data of a captured image captured by a camera fixed to the rotating part; means for calculating a position of the camera based on the position of the specific part and the image data; and means for calculating the position of the center of rotation of the rotating part and the posture of the rotating part based on the position of the specific part and the position of the camera.

The present invention is a program causing a computer to calculate, in a heavy machine comprising a rotating part that rotates horizontally, a position of a center of rotation of the rotating part and a posture of the rotating part, the program causing the computer to: acquire a measurement of a position of a specific part of the rotating part; acquire image data of a captured image captured by a camera fixed to the rotating part; calculate a position of the camera based on the position of the specific part and the image data; and calculate the position of the center of rotation of the rotating part and the posture of the rotating part based on the position of the specific part and the position of the camera.

[Advantageous Effects of Invention]

The present invention can efficiently calculate information on a heavy machine.

[Brief Description of Drawings]

[Figure 1] Figure 1 is a conceptual diagram of an embodiment.
[Figure 2] Figure 2 is a block diagram of a computing apparatus.
[Figure 3] Figure 3 is a flowchart illustrating an example of the procedure of a process.

[Description of Embodiments]

1. First Embodiment

(Overview)

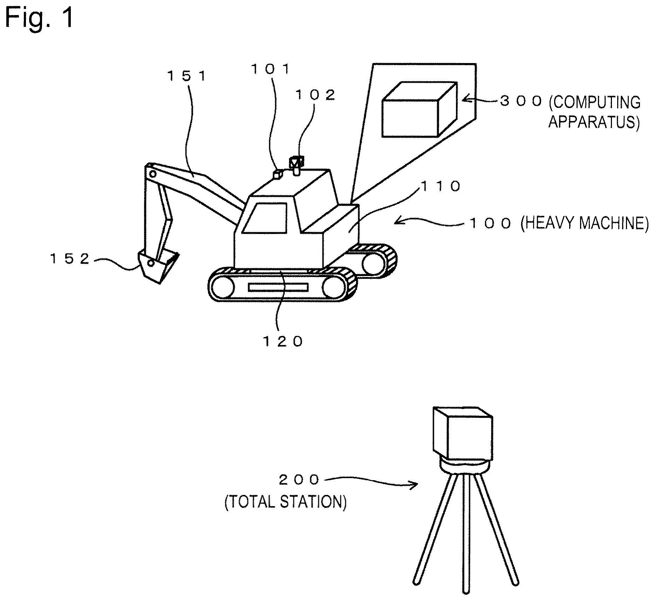

Figure 1 shows a heavy machine 100 for civil engineering work and a total station 200 that is a surveying apparatus for measuring the position of the heavy machine 100. A mounted camera 101 captures images during the operation of the heavy machine 100. Then, 3D data of surroundings of the heavy machine 100 is acquired based on the principle of structure from motion (sfm). The total station 200 repeatedly and continuously measures the position of a reflective prism 102 mounted on the heavy machine 100 while tracking the reflective prism 102.
Images captured by the camera 101 during the operation of the heavy machine 100 are used to calculate the position of the center of rotation of the rotating part 110 of the heavy machine 100. The position of a bucket 152, which is a cutting edge, is calculated based on this information and the position of the reflective prism 102. Continuing this process makes it possible to record or control the position of the bucket 102.

(Heavy Machine)

The heavy machine 100 is a power shovel. The power shovel is an example. The type of the heavy machine is not particularly limited as long as it is a heavy machine for civil engineering work. The heavy machine 100 includes a base part 120 that runs on the ground using a caterpillar and a rotating part 110 that rotates horizontally on the base part 120. The rotating part 110 includes a driver's seat and an arm 151. A bucket 152 (an example of a cutting edge) is provided at the front end of the arm 151. The camera 101 and the reflective prism 102 are fixedly disposed on top of the rotating part 110. The position of the camera 101 and the position of the reflective prism 102 in the rotating part 110 are known. Thus, the relationship between the position of the center of rotation of the rotating part 110 and the positions of the camera 101 and the reflective prism 102 in the rotating part 110 is known.
The camera 101 is a digital still camera that continuously and repeatedly captures still images. Since the heavy machine 100 runs and the rotating part 110 rotates during the operation of the heavy machine 100, the camera 101 faces various directions. Thus, the camera 101 repeatedly captures images of surroundings of the heavy machine 100 during the operation of the heavy machine 100. The capturing interval is set to about 1 Hz to 30 Hz (1 time per second to 30 times per second).
It is also possible to employ a depth camera as the camera 101. It is also possible to employ a configuration in which a camera for capturing video is used as the camera 101 and frame images constituting video are used as still images. Although Figure 1 shows an example of disposing a single camera 101 on the heavy machine 100, it is also possible to dispose a plurality of cameras directed in multiple directions. Further, it is also possible to use a stereo camera.
The reflective prism 102 is an optical reflective target used for surveys using laser light. Here, an entire circumferential reflective prism is used as the reflective prism 102. The reflective prism 102 reflects incident light with its orientation changed by 180°. It is possible to use a reflective target with retroreflective characteristics as the optical reflective target in addition to a reflective prism.
The position of the heavy machine 100 is recognized as the position of the rotation center axis of the rotating part 110. The heavy machine 100 includes a computing unit 300. The computing unit 300 is a computer. It is also possible to provide the computing unit 300 outside the heavy machine 100. The computing unit 300 performs a process of calculating the position of the center of rotation of the rotating part 110 and other processes. Details of the configuration and process of the computing unit 300 will be described later.

Each joint part of the arm 151 is provided with an angle sensor to quantitatively measure the degree of bending of the joint. The position of the bucket 152 relative to the center of rotation of the rotating part 110 is calculated based on measurements of this angle sensor. Thus, the knowledge of the position of the center of rotation of the rotating part 110 and the posture of the rotating part 110 allows calculation of the position (coordinates) of the bucket 152, which is the cutting edge.

(Total Station)

The total station 200 is an example of a surveying apparatus capable of measuring positions. The total station 200 includes a position measuring function using laser light, a camera, a clock, a storage device for survey data, a communication interface, a user interface, a function to search for a survey object (the reflective prism 102), and a function to track the survey object even when it moves. It is possible to use commonly available models as the total station 200.

Prior to processing, the position and posture of the total station 200 in the global coordinate system have been acquired and regarded as known data. Note that the position of the total station 200 is recognized as the position of the optical origin of an optical system for ranging. The global coordinate system is a coordinate system used in maps or GNSS.

The heavy machine 100 starts operating in a state where the total station 200 aims at the reflective prism 102 and is locked. During the operation of the heavy machine 100, the total station 200 repeatedly measures the position of the reflective prism 102 while tracking it. The interval between measurements is about 0.05 seconds (20 Hz) to 5 seconds (0.2 Hz).

(Principle)

The relationship between the position of the center of rotation of the rotating part 110 and the positions of the camera 101 and the reflective prism 102 on the rotating part 110 is known. Thus, the knowledge of the position of the camera 101 and the position of the reflective prism 102 in the global coordinate system allows calculation of the position of the center of rotation of the rotating part 110 in the global coordinate system and also the posture of the rotating part 110. This allows calculation of the position of the bucket 152 in the global coordinate system.

Movement of the heavy machine 100 or rotation of the rotating part 110 changes the position and posture of the camera 101. Thus, continuous capturing of images by the camera 101 during the operation of the heavy machine 100 shifts the viewpoint little by little, resulting in a large number of captured images with overlapped ranges. Two images adjacent to each other on the time axis among the large number of captured images form stereo images, enabling creation of a three-dimensional model of a capturing object based on structure from motion (sfm). In this sfm, the position of the camera where each captured image is captured is calculated.

This position of the camera is obtained as a position in a local coordinate system that describes a three-dimensional model of a capturing object. Here, the position of the reflective prism 102 in the global coordinate system has been measured by the total station 200. Since the positional relationship between the reflective prism 102 and the camera 101 is known, giving the position of the reflective prism 102 as an initial value of the position of the camera 101 in the bundle adjustment calculation allows calculation of the position of the camera 101 in the global coordinate system at the time of capturing each captured image.

This allows calculation of the positions of the camera 101 and the reflective prism 102 in the global coordinate system and also the position of the center of rotation of the rotating part 110. Further, since the positions of the camera 101 and the reflective prism 102 in the rotating part 110 are known, calculating the positions of the camera 101, the reflective prism 102, and the center of rotation of the rotating part 110 in the global coordinate system also allows calculation of the posture of the rotating part 110 in the global coordinate system. Then, the knowledge of the posture of the rotating part 110 and the position of the center of rotation allows calculation of the position of the bucket 152, which is the cutting edge, in the global coordinate system.

(Configuration of Computing Unit)

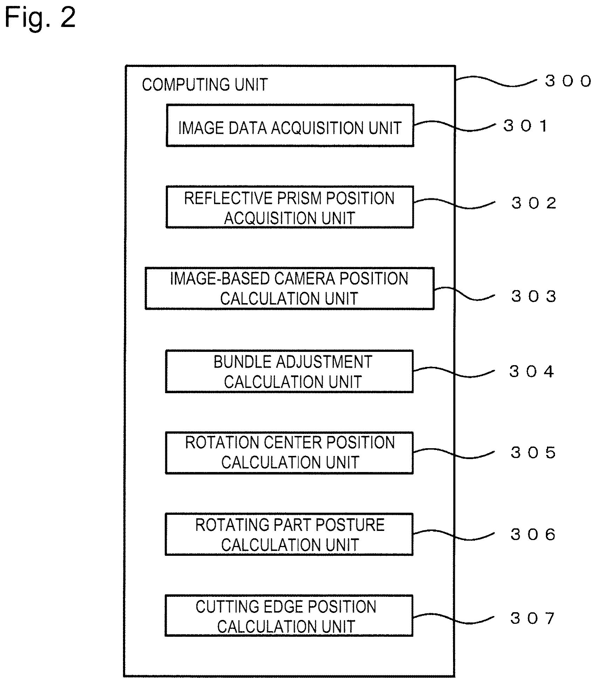

Figure 2 is a block diagram of the computing unit 300. The computing unit 300, which is a computer, includes a CPU, a storage device, and various interfaces. The computing unit 300 includes an image data acquisition unit 301, a reflective prism position acquisition unit 302, an image-based camera position calculation unit 303, a bundle adjustment calculation unit 304, a rotation center position calculation unit 305, a rotating part posture calculation unit 306, and a cutting edge position calculation unit 307.

The computer constituting the computing unit 300 implements these functional units in a software manner. Dedicated hardware can also constitute some or all of the above functional units. It is also possible to employ a configuration in which the computing unit 300 is provided outside the heavy machine 100. For example, it is possible to employ a configuration in which the computing unit 300 is provided on a processing server connected to the Internet and the processing server performs operations, or to employ other configurations.

The image data acquisition unit 301 receives image data of a captured image captured by the camera 101. The image data is associated with the capturing time. The reflective prism position acquisition unit 302 receives data of the position of the reflective prism 102 measured by the total station 200. The position of the reflective prism 102 is obtained in a form in which it is associated with the measurement time. The position and posture of the total station 200 in the global coordinate system are known. The position data of the reflective prism 102 is obtained in the global coordinate system.

The image-based camera position calculation unit 303 calculates the position (the capturing position) of the camera 101 based on images captured by the camera 101 using the principle of sfm. For example, Japanese Patent Laid-Open No. 2013-186816 and other documents describe the principle of sfm. The camera 101 repeatedly captures images at specific intervals. Further, during this capturing, the camera 101 moves with the travelling of the heavy machine 100 and the camera 101 moves with the rotation of the rotating part 110. During these movements, images are also captured. Thus, the camera is present at a different position for each captured image obtained by the camera during movement. Further, the posture of the camera 101 changes with the operation of the heavy machine 100.

The coordinate system that describes the position and posture of the camera 101 and the positions of the feature points extracted from the capturing object in sfm is the local coordinate system.

The principle of calculating the position (the capturing position) of the camera 101 will be described briefly. Now, suppose that there are a captured image 1 captured by the camera 101 at a first position and a captured image 2 captured from a second position slightly shifted from the first position. Further, suppose that the captured ranges of the captured image 1 and the captured image 2 overlap each other. A relative three-dimensional model that defines the relationship between a large number of feature points extracted from this overlapped range, the positional relationship between the first position and the second position, and also the postures of the camera at the first position and the second position is calculated from the principle of three-dimensional photogrammetry (stereo photogrammetry). This is the process of relative orientation.

Next, absolute orientation is performed to calculate the position of the camera 101 in the global coordinate system. This process focuses on the movement trajectory of the camera 101. In this embodiment, the total station 200 tracks and measures the trajectory of the reflective prism 102, which has been found in the global coordinate system.

Thus, the position of the reflective prism 102 is regarded as the position of the camera 101 to adjust the scale of, translationally move, and rotationally move the relative three-dimensional model calculated in the above relative orientation so that the movement trajectory of the reflective prism 102 fits the movement trajectory of the camera 101.

Fitting the movement trajectory of the camera 101 in the relative three-dimensional model (the trajectory that traces the position at each time) to the movement trajectory of the reflective prism 101 allows the movement trajectory of the camera 101 in the relative three-dimensional model to be described in the global coordinate system. This gives the actual scale (the actual value) to the position of the camera 101 in the relative three-dimensional model. When each position of the camera in the relative three-dimensional model is given, each posture of the camera in the relative three-dimensional model is also given the value in the global coordinate system. Further, the actual position of each feature point in the relative three-dimensional model is also given. This gives the actual value (the absolute value) in the global coordinate system of each parameter in the relative three-dimensional model obtained by the relative orientation. This is the absolute orientation.

Note that the relative three-dimensional model obtained in the relative orientation contains errors. Further, regarding the position of the camera 101 as the position of the reflective prism 102 in the above absolute orientation also causes errors. Thus, the fitting of the trajectory of the position of the camera 101 in the above absolute orientation is imperfect and contains errors. Thus, the values of the feature points and the exterior orientation elements (the position and posture) of the camera 101 obtained by the absolute orientation also contain errors.

As mentioned above, the movement trajectories of the camera 101 and the reflective prism 102 are used as a foothold to give the value in the absolute coordinate system to the movement trajectory of the camera 101 in the relative three-dimensional model used in the relative orientation, thereby giving the absolute value and the actual scale to the relative three-dimensional model.

The above absolute orientation can calculate the three-dimensional positions of the feature points in each image and the exterior orientation elements (the position and posture) of the camera 101 corresponding to each image in the global coordinate system, although they contain errors. Bundle adjustment calculation described below corrects the above errors.

The bundle adjustment calculation unit 304 sets up an observation equation in Expression 1 below for each luminous flux in each image based on a collinearity condition under which a luminous flux (bundle) connecting three points: a feature point obtained from the captured image of the capturing object, a point on the captured image, and the center of projection must be on the same straight line, and simultaneously adjusts the coordinates $(X_j, Y_j, Z_j)$ of the feature point and the parameters $(X_{oi}, Y_{oi}, Z_{oi}, a_{11i}$ to $a_{33i})$ of the position and posture of the camera 101 using the least square method.

This adjustment calculation sets up the observation equation in Expression 1 and an observation equation in Expression 2, and optimizes the parameters (the feature point (Xj, Yj, Zj) and the position $(X_{oi}, Y_{oi}, Z_{oi})$ and the posture ($a_{11i}$ to $a_{33i}$ (the rotation matrix)) of the camera 101) using the least square method.

[Expression 1]

$$\sum_{i=1}^{m}\sum_{j=1}^{n}\left\{-c\frac{a_{11i}(X_j - X_{0i}) + a_{12i}(Y_j - Y_{0i}) + a_{13i}(Z_j - Z_{0i})}{a_{31i}(X_j - X_{0i}) + a_{32i}(Y_j - Y_{0i}) + a_{33i}(Z_j - Z_{0i})} - x_{ij}\right\}^2$$

$$\sum_{i=1}^{m}\sum_{j=1}^{n}\left\{-c\frac{a_{21i}(X_j - X_{0i}) + a_{22i}(Y_j - Y_{0i}) + a_{21i}(Z_j - Z_{0i})}{a_{31i}(X_j - X_{0i}) + a_{32i}(Y_j - Y_{0i}) + a_{33i}(Z_j - Z_{0i})} - y_{ij}\right\}^2$$

c: The screen distance (focal length)
(Xj, Yj, Zj): The three-dimensional coordinates of a feature point of interest
$(x_{ij}, y_{ij})$ : The coordinates on the image (on the screen) of the point j on the image i
$(X_{oi}, Y_{oi}, Z_{oi})$ : The position of the camera 101 in capturing the photograph i
($a_{11i}$ to $a_{33i}$) : The rotation matrix representing the posture of the camera 101 in capturing the photograph i.

[Expression 2]

$$\sum_{i=1}^{m}\left\{X_{0i} - \left(X_{pi} + a_{11i}L_X + a_{12i}L_Y + a_{13i}L_Z\right)\right\}^2$$

$$\sum_{i=1}^{m}\left\{Y_{0i} - \left(Y_{pi} + a_{21i}L_X + a_{22i}L_Y + a_{23i}L_Z\right)\right\}^2$$

$$\sum_{i=1}^{m}\left\{Z_{0i} - \left(Z_{pi} + a_{31i}L_X + a_{32i}L_Y + a_{33i}L_Z\right)\right\}^2$$

$(X_{pi}, Y_{pi}, Z_{pi})$ : The position of the reflective prism 102 at the time of capturing the image i
$(L_X, L_Y, L_Z)$ : The separation between the position of the camera 101 (the center of projection) and the reflection point of the reflective prism 102

In Expression 1 above, the three-dimensional coordinates of the feature point in the global coordinate system based on the results of the above absolute orientation are used as the initial value of (Xj, Yj, Zj). The position of the camera 101 in the global coordinate system based on the results of the above absolute orientation is used as the initial value of $(X_{oi}, Y_{oi}, Z_{oi})$. The value of the rotation matrix representing the posture of the camera 101 in the global coordinate system based on the results of the above absolute orientation is used as the initial value of ($a_{11i}$ to $a_{33i}$). The position of the reflective prism 102 measured by the total station 200 is used as $(X_{pi}, Y_{pi}, Z_{pi})$.

Expression 2 is an observation equation for adjustment calculation considering the deviation between the positions of the camera 101 and the reflective prism 102. $(L_X, L_Y, L_Z)$ is a parameter that determines the positional relationship between the camera 101 and the reflective prism 102.

The adjustment calculation using Expression 1 and Expression 2 calculates the residual of Expression 1 and Expression 2 using the feature point (Xj, Yj, Zj), the exterior orientation elements $(X_{oi}, Y_{oi}, Z_{oi}, a_{11i}$ to $a_{33i}$ (the rotation matrix representing the posture)), and $(L_X, L_Y, L_Z)$ as parameters. At this time, the least square method is used to search for a combination of (Xj, Yj, Zj), $(X_{oi}, Y_{oi}, Z_{oi}, a_{11i}$ to $a_{33i})$ , and $(L_X, L_Y, L_Z)$ such that the above residual converges.

Specifically, adding a correction amount to the parameters (Xj, Yj, Zj), $(X_{oi}, Y_{oi}, Z_{oi}, a_{11i}$ to $a_{33i})$, and $(L_X, L_Y, L_Z)$ so that the residual indicated by Expression 1 and Expression 2 decreases and simultaneously calculating Expression 1 and Expression are repeated. Then, a combination of the unknown parameters $(X_j, Y_j, Z_j)$, $(X_{oi}, Y_{oi}, Z_{oi}, a_{11i}$ to $a_{33i})$, and $(L_X, L_Y, L_Z)$ that satisfies convergence conditions for Expression 1 and Expression 2 is identified. A sufficiently small residual and a sufficiently small change in the residual from the previous calculation (the state where the fluctuation in the calculation result has converged) are used as the convergence conditions.

The rotation center position calculation unit 305 calculates the position of the center of rotation of the rotating part 110 based on the position of the camera 101 in the global coordinate system obtained as a result of the bundle adjustment calculation, the position of the reflective prism 102 in the global coordinate system measured by the total station 200, and the positional relationship between the camera 101, the reflective prism 102, and the center of rotation of the rotating part 110, which is known information (if the positional relationship between the three points is known, giving the positions of two of them allows determination of the position of the remaining one point).

The rotating part posture calculation unit 306 calculates the posture of the rotating part 110 in the global coordinate system based on the position of the camera 101 in the global coordinate system obtained as a result of the bundle adjustment calculation, the position of the reflective prism 102 in the global coordinate system measured by the total station 200, and the positional relationship between the camera 101, the reflective prism 102, and the center of rotation of the rotating part 110, which is known information (if the positional relationship between the three points is known, giving the positions of two of them allows determination of the orientation of the figure formed by these three points). The cutting edge position calculation unit 307 calculates the position of the cutting edge (which is the bucket 152 in this case) of the heavy machine in the global coordinate system based on the position of the center of rotation of the rotating part 110 and the output of the angle sensor provided to the joint part of the arm.

(Example of Process)

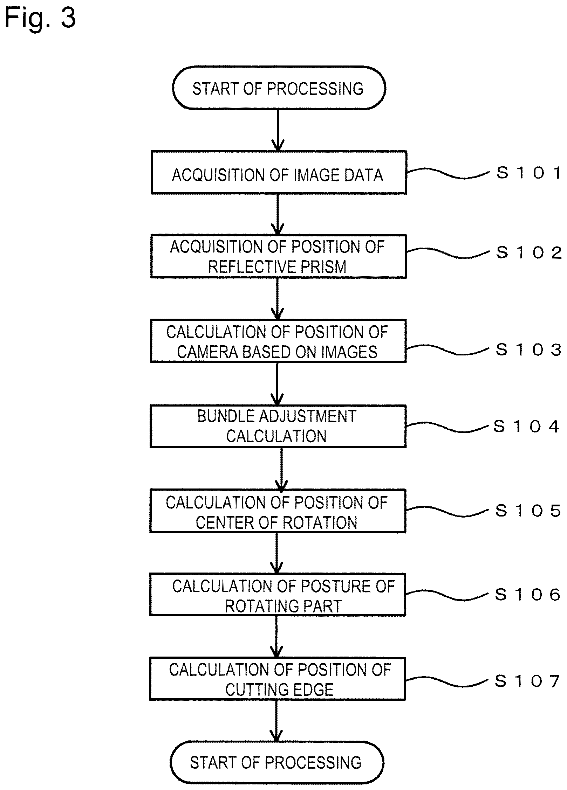

Figure 3 is a flowchart illustrating an example of the procedure of a process in the computing apparatus 300 in Figure 2. The storage device of the computer constituting the computing apparatus 300 or an appropriate storage medium stores a program for executing the process in Figure 3, and the computer executes the program.

First, the premise of the process will be described. Here, it is assumed that the camera 101 and the reflective prism 102 are fixed to the rotating part 110 of the heavy machine 100 and the positional relationship between the center of rotation of the rotating part 110, the camera 101, and the reflective prism 102 is known. Of course, the separation L between the camera 101 and the reflective prism 102 is known.

The camera 101 repeatedly captures images during the operation of the heavy machine 100. The total station 200 continuously and repeatedly measures the position of the reflective prism 102. The position and posture of the total station 200 in the global coordinate system are known. Further, the time of capturing by the camera is synchronized with the time of positioning of the reflective prism 101 by the total station, and the relationship between the two is known.

(First Example)

This process continuously calculates the position of the center of rotation of the rotating part 110 during the operation of the heavy machine. The first process is repeated at intervals such as every 1 second. This interval is selected from about 0.1 seconds to 5 seconds.

First, the camera 101 starts capturing an image at the timing when the heavy machine 100 starts working to acquire image data of the captured image (step S101). Further, the total station 200 starts measuring the position of the reflective prism 102 to acquire data of the measurement result (step S102).

After acquisition of the image data of the captured image captured by the camera 101, the process of sfm is performed to obtain the position of the camera of each captured image (the position of the capturing viewpoint) and the three-dimensional data of the capturing object (step S103). The image-based camera position calculation unit 303 performs this process. Next, the bundle adjustment calculation is performed (step S104) to obtain the position of the camera 101 in the absolute coordinate system. The bundle adjustment calculation unit 304 performs this process.

After acquisition of the position of the camera 101, the position of the center of rotation of the rotating part 110 in the global coordinate system is calculated based on the position of the camera 101 and the position of the reflective prism 102 (step S105). The rotation center position calculation unit 306 performs this process. Further, the posture (orientation) of the rotating part 110 in the global coordinate system is calculated based on the position of the camera 101 and the position of the reflective prism 102 (step S106). The rotating part posture calculation unit 306 performs this process.

After calculation of the position of the center of rotation of the rotating part 110 and the posture of the rotating part 110, the position of the bucket 152 (the position of the cutting edge) is calculated based on the position of the center of rotation and the posture of the rotating part 110 (step S107). The cutting edge position calculation unit 307 performs this process.

(Second Example)

The second example calculates the position of the center of rotation at a specific timing. For example, when the travelling of the heavy machine 100 is detected, when an impact is sensed in the heavy machine 100, when a change in the tilt is sensed, when a change in the position of the center of rotation of the rotating part 110 is detected, when the deterioration in the accuracy of calculating the position of the center of rotation of the rotating part 110 is expected, when a certain time has passed since the previous process, when a signal requesting the process of calculating the center of rotation of the rotating part 110 is received, or in other cases, the following process is performed.

In these cases, giving a processing instruction results in acquisition of measurement data of the position of the reflective prism 102 and data of captured images captured by the camera 101 in the past or future for a specific period of time from that point of time. The specific period is set to 10 seconds to 30 seconds. Then, the procedure described in the first example is performed to calculate the posture of the rotating part 110 and the position of the center of rotation, and also the position of the bucket 152 (the position of the cutting edge) based on the position of the center of rotation. Thereafter, the position of the bucket 152 (the position of the cutting edge) based on the calculated position of the center of rotation of the rotating part 110 is calculated repeatedly and continuously. Then, if it is required to calculate the position of the center of rotation of the rotating part 110 at the next timing, the position of the center of rotation of the rotating part 110 is calculated again to update the information.

(Summary)

In a method of calculating, in a heavy machine 100 comprising a rotating part 110 that rotates horizontally, a position of a center of rotation of the rotating part 110 and a posture of the rotating part 110, a total station 200 measures a position of a reflective prism 102 fixed to the rotating part 110. Image data of a captured image captured by a camera 101 fixed to the rotating part 110 is obtained. A position of the camera 101 is calculated based on the position of the reflective prism 102 measured by the total station 200 and the image data of the captured image captured by the camera 101. The position of the center of rotation of the rotating part 110 and the posture of the rotating part 110 are calculated based on the calculated positions of the reflective prism 102 and the camera 101.

(Advantage)

This embodiment can efficiently calculate the position of the center of rotation of the rotating part 110 of the heavy machine 100 and the posture of the rotating part 110. For example, methods of detecting the center of rotation of the rotating part 110 include a method of rotating the rotating part 110, measuring the position of the reflective prism 102 during that time, measuring the arc-shaped movement path of the reflective prism 102, and calculating the center of rotation from the center of curvature. This method requires calibration work in which the rotating part 110 is rotated separately from civil engineering work, and is thus cumbersome and inefficient. In particular, performing this work in the middle of civil engineering work requires interruption of the civil engineering work and is thus inefficient. Further, if there are workers around, it is required to ensure their safety, and thus this method is also inefficient in that respect.

This embodiment requires no rotation of the rotating part 110 for calculating the center of rotation of the rotating part 110 or interruption of the civil engineering work. This allows efficient calculation of the position of the bucket 152.

2. Second Embodiment

It is also possible to mount a GNSS positioning device on the heavy machine and determine the position of the camera 101 on the heavy machine using this GNSS positioning device. This can eliminate the need for the reflective prism and the total station (of course, it is also possible to use them together). Although measurement of positions using GNSS contains errors, adjustment calculation can reduce errors of GNSS. The adjustment calculation performs calculation assuming that an antenna of the GNSS positioning device is installed instead of the reflective prism 102 in Figure 1. Further, using relative positioning such as the RTK method enables reduction of measurement errors. The handling of feature points, various types of orientation, and other data processing are the same as those in the first embodiment.

3. Third Embodiment

It is also possible to use a local coordinate system set in a work site instead of the global coordinate system. In this case, the position and posture of the total station 200 are calculated in advance in the local coordinate system.

4. Fourth Embodiment

An example method of acquiring the positional relationship between the camera 101, the reflective prism 102, and the center of rotation of the rotating part 110 will be described. This example assumes that the positions of the camera 101 and the reflective prism 102 are positions deviated from the center of rotation of the rotating part 110. When the camera 101 and the reflective prism 102 are disposed on the heavy machine 100, the following work is performed.

First, the rotating part 110 is rotated, and the camera 101 captures images during that time. Further, the total station 200 measures the position of the reflective prism 102 during the above rotation.

The center of curvature O of the movement trajectory of the camera 101 is calculated based on sfm using the captured images. Further, the center of curvature O' of the movement trajectory of the reflective prism 102 measured by the total station 200 is calculated. Assuming that the point O, the point O', and the center of rotation of the rotating part 110 coincide with each other, the positional relationship between the camera 101, the reflective prism 102, and the center of rotation of the rotating part 110 is acquired.

5. Fifth Embodiment

Another example method of acquiring the positional relationship between the camera 101, the reflective prism 102, and the center of rotation of the rotating part 110 will be described. This example assumes that the positions of the camera 101 and the reflective prism 102 are positions deviated from the center of rotation of the rotating part 110. When the camera 101 and the reflective prism 102 are disposed on the heavy machine 100, the following work is performed.

First, the rotating part 110 is rotated, and the camera 101 captures images during that time. Further, the total station 200 measures the position of the reflective prism 102 during the above rotation.

The position of the camera 101 is calculated based on sfm using the captured images. The bundle adjustment calculation described in the first embodiment is performed to optimize the position of the camera 101.

Then, the center of curvature of the trajectory of the optimized position of the camera 101 during the above rotation is calculated and regarded as the center of rotation of the rotating part 110. This obtains the relationship between the positions of the camera 101, the reflective prism 102, and the center of rotation of the rotating part 110.

6. Sixth Embodiment

The total station 200 may lose sight of the reflective prism 102 and fail in tracking it. In this case, the target search function of the total station 200 is used to search for the reflective prism 102, catch the reflective prism 102, measure the position of the reflective prism 102, and then perform the process in Figure 3.

[Reference Signs List]

| | |
|---|---|
| 100 | heavy machine |
| 101 | camera |
| 102 | reflective prism |
| 110 | rotating part |
| 120 | base part |
| 151 | arm |
| 152 | bucket |
| 200 | total station |
| 300 | computing apparatus |

**Claims**

1.    A method of acquiring information on a heavy machine, the heavy machine comprising a rotating part that rotates horizontally, the method being a method of calculating a position of a center of rotation of the rotating part and a posture of the rotating part, the method comprising:

    measuring a position of a specific part of the rotating part;
    obtaining image data of a captured image captured by a camera fixed to the rotating part;
    calculating a position of the camera based on the position of the specific part and the image data; and
    calculating the position of the center of rotation of the rotating part and the posture of the rotating part based on the position of the specific part and the position of the camera.

2. The method of acquiring information on a heavy machine according to claim 1, wherein the position of the specific part is a position of a reflective prism fixed to the rotating part.

3. The method of acquiring information on a heavy machine according to claim 1 or 2, wherein
   the position of the camera is calculated by bundle adjustment calculation using the position of the specific part as the position of the camera.

4. The method of acquiring information on a heavy machine according to any one of claims 1 to 3, wherein

   relationship between the positions of the specific part of the rotating part, the camera, and the center of rotation of the rotating part is known, and
   determining the positions of the specific part and the camera in a specific coordinate system allows calculation of the position of the center of rotation of the rotating part and the posture of the rotating part in the coordinate system.

5. A system that calculates, in a heavy machine comprising a rotating part that rotates horizontally, a position of a center of rotation of the rotating part and a posture of the rotating part, the system comprising:

   means for measuring a position of a specific part of the rotating part;
   means for obtaining image data of a captured image captured by a camera fixed to the rotating part;
   means for calculating a position of the camera based on the position of the specific part and the image data; and
   means for calculating the position of the center of rotation of the rotating part and the posture of the rotating part based on the position of the specific part and the position of the camera.

6. A program causing a computer to calculate, in a heavy machine comprising a rotating part that rotates horizontally, a position of a center of rotation of the rotating part and a posture of the rotating part, the program causing the computer to:

   acquire a measurement of a position of a specific part of the rotating part;
   acquire image data of a captured image captured by a camera fixed to the rotating part;
   calculate a position of the camera based on the position of the specific part and the image data; and
   calculate the position of the center of rotation of the rotating part and the posture of the rotating part based on the position of the specific part and the position of the camera.

Fig. 1

151 101
102

300 (COMPUTING APPARATUS)

110

100 (HEAVY MACHINE)

152

120

200 (TOTAL STATION)

## Fig. 2

COMPUTING UNIT — 300

IMAGE DATA ACQUISITION UNIT — 301

REFLECTIVE PRISM POSITION ACQUISITION UNIT — 302

IMAGE-BASED CAMERA POSITION CALCULATION UNIT — 303

BUNDLE ADJUSTMENT CALCULATION UNIT — 304

ROTATION CENTER POSITION CALCULATION UNIT — 305

ROTATING PART POSTURE CALCULATION UNIT — 306

CUTTING EDGE POSITION CALCULATION UNIT — 307

# Fig. 3

```
        ╭─────────────────────────╮
        │    START OF PROCESSING   │
        ╰─────────────────────────╯
                     │
                     ▼
        ┌─────────────────────────┐
        │  ACQUISITION OF IMAGE DATA │ ～ S101
        └─────────────────────────┘
                     │
                     ▼
        ┌─────────────────────────┐
        │   ACQUISITION OF POSITION OF │ ～ S102
        │      REFLECTIVE PRISM     │
        └─────────────────────────┘
                     │
                     ▼
        ┌─────────────────────────┐
        │   CALCULATION OF POSITION OF │ ～ S103
        │   CAMERA BASED ON IMAGES  │
        └─────────────────────────┘
                     │
                     ▼
        ┌─────────────────────────┐
        │    BUNDLE ADJUSTMENT      │ ～ S104
        │      CALCULATION          │
        └─────────────────────────┘
                     │
                     ▼
        ┌─────────────────────────┐
        │   CALCULATION OF POSITION OF │ ～ S105
        │    CENTER OF ROTATION     │
        └─────────────────────────┘
                     │
                     ▼
        ┌─────────────────────────┐
        │   CALCULATION OF POSTURE OF │ ～ S106
        │      ROTATING PART        │
        └─────────────────────────┘
                     │
                     ▼
        ┌─────────────────────────┐
        │   CALCULATION OF POSITION OF │ ～ S107
        │      CUTTING EDGE         │
        └─────────────────────────┘
                     │
                     ▼
        ╭─────────────────────────╮
        │    START OF PROCESSING   │
        ╰─────────────────────────╯
```

## INTERNATIONAL SEARCH REPORT

International application No.

**PCT/JP2024/011634**

### A. CLASSIFICATION OF SUBJECT MATTER

*G01C 15/00*(2006.01)i
FI:   G01C15/00 103B; G01C15/00 103C; G01C15/00 103E

According to International Patent Classification (IPC) or to both national classification and IPC

### B. FIELDS SEARCHED

Minimum documentation searched (classification system followed by classification symbols)

G01C15/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2009-042175 A (KOISHI KK) 26 February 2009 (2009-02-26)<br>entire text, all drawings | 1-6 |
| A | JP 2019-045425 A (KABUSHIKI KAISHA TOPCON) 22 March 2019 (2019-03-22)<br>entire text, all drawings | 1-6 |
| A | WO 2010/001940 A1 (KABUSHIKI KAISHA TOPCON) 07 January 2010 (2010-01-07)<br>entire text, all drawings | 1-6 |
| P, A | JP 2023-119313 A (MAC KK) 28 August 2023 (2023-08-28)<br>entire text, all drawings | 1-6 |
| P, A | WO 2024/057757 A1 (KABUSHIKI KAISHA TOPCON) 21 March 2024 (2024-03-21)<br>entire text, all drawings | 1-6 |
| E, A | WO 2024/062781 A1 (KABUSHIKI KAISHA TOPCON) 28 March 2024 (2024-03-28)<br>entire text, all drawings | 1-6 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 May 2024** | **11 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2024/011634**

| Patent document cited in search report | | | Publication date (day/month/year) | Patent family member(s) | | | Publication date (day/month/year) |
|---|---|---|---|---|---|---|---|
| JP | 2009-042175 | A | 26 February 2009 | (Family: none) | | | |
| JP | 2019-045425 | A | 22 March 2019 | US | 2019/0073794 | A1 | |
| | | | | entire text, all drawings | | | |
| | | | | EP | 3454008 | A1 | |
| | | | | CN | 109461190 | A | |
| WO | 2010/001940 | A1 | 07 January 2010 | US | 2011/0096957 | A1 | |
| | | | | entire text, all drawings | | | |
| | | | | EP | 2309225 | A1 | |
| JP | 2023-119313 | A | 28 August 2023 | (Family: none) | | | |
| WO | 2024/057757 | A1 | 21 March 2024 | JP | 2024-042417 | A | |
| | | | | entire text, all drawings | | | |
| WO | 2024/062781 | A1 | 28 March 2024 | JP | 2024-046228 | A | |
| | | | | entire text, all drawings | | | |

Form PCT/ISA/210 (patent family annex) (July 2022)

**EP 4 692 722 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8043093 A
- JP 2018146407 A
- JP 2013186816 A